(19) Europäisches Patentamt
European Patent Office
Office européen des brevets

(11) Veröffentlichungsnummer: **0 280 222**
**A2**

(12) **EUROPÄISCHE PATENTANMELDUNG**

(21) Anmeldenummer: **88102525.8**

(22) Anmeldetag: **20.02.88**

(51) Int. Cl.4: **C07C 101/18** , C09D 11/10 , C08F 20/34

(30) Priorität: **27.02.87 DE 3706355**

(43) Veröffentlichungstag der Anmeldung: **31.08.88 Patentblatt 88/35**

(84) Benannte Vertragsstaaten: **AT BE CH DE ES FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Weiss, Wolfram, Dr.**
**Am Speyerweg 40**
**D-6704 Mutterstadt(DE)**
Erfinder: **Beck, Erich, Dr.**
**Schweriner Weg 8**
**D-6800 Mannheim 31(DE)**
Erfinder: **Jacobi, Manfred, Dr.**
**Heidelberger Ring 32 b**
**D-6710 Frankenthal(DE)**
Erfinder: **Richter, Peter, Dr.**
**Bensheimer Ring 24**
**D-6710 Frankenthal(DE)**

(54) **Additionsprodukte aus Acrylaten und Aminen sowie deren Verwendung in strahlungshärtbaren Massen.**

(57) Die vorliegende Erfindung betrifft Additionsprodukte aus

A) einem Ester der Acrylsäure und/oder Methacrylsäure und einem mehrwertigen Alkohol mit

B) einem primären Monoamin mit einem Molverhältnis von Monoamin zu acrylischer Doppelbindung des Esters von 0,05 : 1 bis 0,4 : 1 sowie deren Verwendung in strahlungshärtbaren Überzugsmassen und Druckfarben.

EP 0 280 222 A2

Xerox Copy Centre

# Additionsprodukte aus Acrylaten und Aminen sowie deren Verwendung in strahlungshärtbaren Massen

Die vorliegende Erfindung betrifft Additionsprodukte aus

A) einem Ester der Acrylsäure und/oder Methacrylsäure und einem mehrwertigen Alkohol mit

B) einem primären Monoamin mit einem Molverhältnis von Monoamin zu (meth)acrylischer Doppelbindung des Esters von 0,05 : 1 bis 0,4 : 1 sowie deren Verwendung in strahlungshärtbaren Überzugsmassen und Druckfarben.

Es ist bekannt, Massen auf der Basis von Acrylsäureestern durch Strahlung, insbesondere UV-Strahlung, zu härten. Hier tritt jedoch das Problem auf, daß bei der Aushärtung, insbesondere von Oberflächen, das Vorhandensein von Luft stört.

Aus der DE-PS 26 25 538 sind photopolymerisierbare Überzugsmassen bekannt, die als Reduktionsmittel bzw. Ketten übertragende Verbindungen Amine enthalten. Die Verwendung eines solches freien Amines hat den Nachteil, daß dieses als Weichmacher wirken kann und zu einem unerwünschten Belag auf der Oberfläche führt.

Durch Einbau der Aminogruppe in ein Molekül, das noch polymerisationsfähige Gruppen enthält, wird ein einpolymerisiertes Amin erhalten, das die obengenannten Nachteile nicht aufweist. Eine bekannte Methode des Einbaues ist die Addition von Aminen an doppelbindungsreiche Moleküle, die analog einer Michael-Addition verläuft und die beispielsweise in F. Möller, Houben-Weyl, Bd. 11/1 (1957), S. 277-280, beschrieben ist. Die US-PS 2 759 913 lehrt die Anlagerung von Aminen an aktivierte, olefinisch ungesättigte Verbindungen, wie Acrylate in äquimolaren Mengen, die zur vollständigen Umsetzung der aktivierten ethylenischen Doppelbindungen führt. Systematische Untersuchungen über die Anlagerung von Aminoalkoholen an Acrylate wurden von Ogata, Bull. Chem. Soc. Jap. 39. Seiten 1486-1490, 1966, durchgeführt.

In der DE-PS 2 346 424 wird die Herstellung von strahlungshärtbaren Massen, ausgehend von Acrylestern mehrwertiger Alkohole und sekundären, aliphatischen monofunktionellen Aminen, beschrieben. Diese Massen weisen den Nachteil verminderter Lagerstabilität auf. Die Anlagerung eines sekundären Amins führt außerdem zu einer Verminderung der Acrylesterfunktionalität des Moleküls und somit auch Verminderung der Vernetzungsmöglichkeiten für die strahlungsinduzierte Polymerisation.

Aufgabe der vorliegenden Erfindung ist die Bereitstellung von strahlungshärtbaren Massen auf Basis von Acrylsäure-und/oder Methacrylsäureestern, die lagerstabil sind und die in Gegenwart von Luft auch an der Oberfläche schnell und vollständig aushärten und die dadurch für Lacke, Überzugs-, Abstrichmittel sowie Druckfarben geeignet sind.

Demgemäß wurden Additionsprodukte gefunden aus

A) einem Ester der Acrylsäure und/oder Methacrylsäure und einem mehrwertigen Alkohol mit

B) einem primären Monoamin mit einem Molverhältnis von Monoamin zu (meth)acrylischer Doppelbindung des Esters von 0,05 : 1 bis 0,4 : 1.

Geeignete Acrylsäure-bzw. Methacrylsäureester (A) sind beispielsweise die Ester der Acrylsäure oder Methacrylsäure mit 2-wertigen aliphatischen Alkoholen, wie Ethylenglykol, Propylenglykol, Butylenglykol, Diethylenglykol, Butandiol-1,4 und Hexandiol-1,6, mit 3-wertigen Alkoholen, wie Trimethylolpropan und Glycerin, mit 4-wertigen Alkoholen, wie Pentaerythrit, oder mit 6-wertigen Alkoholen, wie Sorbit.

Weiterhin sind cycloaliphatische Alkohole, wie Cyclohexanole und 1,4-Bis-(hydroxymethyl)-cyclohexan, araliphatische Alkohole, wie 1,3-Xylylendiol sowie Phenole wie 2,2-Bis-(4-hydroxyphenyl)-propan (Bisphenol A) geeignet.

Die oben aufgeführten mehrwertigen Alkohole können vor der Veresterung mit Acrylsäure oder Methacrylsäure durch Alkoxylierung mit z.B. Ethylenoxid oder Propylenoxid in höhermolekulare Etheralkohole überführt worden sein. Draus resultieren Polyetheracrylate oder Polyethermethacrylate.

Daneban gewinnen Polyesteracrylate bzw. -methacrylate als Ester (A) immer mehr an Bedeutung. Hier ist der merwertige Alkohol ein OH-gruppenhaltiger Polyester.

In manchen Fällen ist es besonders zweckmäßig, ein Epoxyharz mit Acrylsäure oder Methacrylsäure in einer stöchiometrischen Menge, bezogen auf die Epoxyfunktionalität, umzusetzen. Polyglycidylether von Bisphenol A sind in diesem Hinblick besonders geeignet. Sie können vor der Umsetzung noch einige Hydroxylgruppen enthalten. Die Reaktion mit der Acrylsäure oder Methacrylsäure führt zu weiteren Hydroxylgruppen. Derartige mehrwertige Acrylsäureester bzw. Methacrylsäureester werden als Epoxyacrylate bzw. -methacrylate bezeichnet. Durch Addition von hydroxygruppenhaltigen Acrylestern bzw. Methacrylestern wie Hydroxyethylacrylat oder Hydroxymethylacrylat and isocyanatgruppenhaltige Mono-bzw. Oligomere werden die Polyurethanacrylate bzw. -methacrylate erhalten, die ebenso zu den erfindungsgemäßen anwendbaren Acrylsäure-bzw. Methacrylsäureestern (A) gehören.

Die Veresterung kann vollständig sein, jedoch wird in manchen Fällen eine unvollständige Veresterung bevorzugt, um Polyester zu erhalten, die noch restliche Hydroxylgruppen aufweisen.

Als Amine (B) sind alle premären Monoamine geeignet, die eine Michael-Addition eingehen. Von den aliphatischen Monoaminen sind beispielsweise n-butylamin, n-Hexylamin, 2-Ethylhexylamin, Dodecylamin und Octadecylamin genannt, von den cycloaliphatischen Aminen Cyclohexylamin, von den aromatengruppenhaltigen Aminen Benzylamin und von den heterocyclen-bzw. heteroaromatengruppenhaltigen Aminen 1-(3-Aminopropyl-)imidazol, 2-Aminomethylthiophen und Tetrahydrofurfurylamin.

Besonders geeignet sind Alkanolamine, wie Ethanolamin, 3-Aminopropanol und Monoisopropanolamin. Auch Alkoxylkylamine, wie Methoxypropylamin und Aminoethoxyethanol können verwendet werden.

Einige der erfindungsgemäß erhaltenen Produkte sind bei Raumtemperatur flüssig. Die flüssige Form kann bei der Anwendung der Reaktionsprodukte zweckmäßig sein. Die erfindungsgemäßen Produkte umfassen aber auch die festen und hochviskosen Massen, die durch Aufschmelzen oder durch Lösen in einem entsprechenden Lösungsmittel in das Reaktionsgemisch eingebracht werden.

Die erfindungsgemäßen Massen werden hergestellt, indem an einem Acrylsäureester bzw. Methacrylsäureester der angegebenen Art oder ein Gemisch dieser Ester in einer der Michael-Addition analogen Reaktion ein primäres, aliphatisches Monoamin, bevorzugt Hydroxyalkylamin, addiert wird. Die erhaltenen modifizierten Acrylsäureester bzw. Methacrylsäureester enthalten noch nicht umgesetzte Acrylestergruppen bzw. Methacrylestergruppen und besitzen zum Teil eine tertiäre $\beta$-Aminogruppe mit folgender Struktur

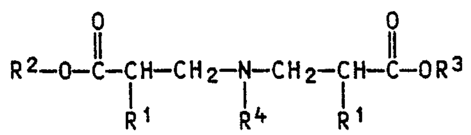

$R^1$ = H oder $CH_3$
$R^{2,3,4}$ = Kohlenwasserstoffreste mit 1 bis 18 C-Atomen

Die Additions-Reaktion ist exotherm und wird in flüssiger Phase bei mäßiger Temperatur in Abwesenheit eines Katalysators durchgeführt. Das primäre Monoamin (B) wird in entsprechender Menge dem Acrylat (A) unter Rühren bei Raumtemperatur zugesetzt. Die Temperatur steigt auf etwa 40°C an. Wenn die Reaktion beendet ist, hört die Wärmeentwicklung auf und die Temperatur sinkt. Durch Erhöhung der Temperatur kann die Reaktion beschleunigt werden, bei 60° C ist sie nach ca. 12 Stunden abgeklungen.

Am besten ist es, wenn die Additions-Reaktion im wesentlichen vollständig erfolgt, jedoch ist es nicht unbedingt erforderlich, da die Doppelbindungen des nichtumgesetzten Acrylats (A) noch co-polymerisieren über die Doppelbindungen des mit Amin modifizierten Polyacrylats. Wegen der Reproduzierbarkeit sollte jedoch die Reaktion vollständig sein, was bei Reaktionstemperaturen über 50° C erreicht wird.

Die anzuwendende Aminmenge variiert abhängig von der in Aussicht genommenen Anwendung.

Im allgemeinen wird ein Molverhältnis von Monoamin (B) zu (meth)acryliscer Doppelbindung des Esters (A) von 0,005 : 1 bis 0,4 : 1, bevorzugt 0,01 : 1 bis 0,3 : 1 angewendet. Dadurch sind einerseits in dem Produkt noch freie polymerisationsfähige (Meth)Acrylatgruppen vorhanden, andererseits wird der störende Einfluß der Luft bei der Härtung hinreichend unterdrückt.

Die Umsetzung wird im allgemeinen ohne Lösungsmittel durchgeführt, aber es können auch Lösungsmittel angewandt werden.

Damit bei der Additionsreaktion keine unerwünschte Polymerisation stattfindet, werden dem Reaktionsgemisch im allgemeinen Polymerisationsinhibitoren zugesetzt.

Zu den geeigenten Polymerisationsinhibitoren gehören bekannte Produkte, wie substituierte Phenole, wie 2,6-Di-tert.-butyl-p-kresol, Hydrochinone, wie Methylhydrochinone, und Thioether, wie Thiodiglykol oder Phenothiazin.

Für die Anwendung der erfindungsgemäßen Massen in UV-härtbaren Systemen müssen diese Massen oder deren Mischungen mit anderen ethylenischen, UV-vernetzbaren Materialien in bekannter Weise noch mit Photoinitiatoren sowie gegebenenfalls Photosensibilisatoren versehen werden.

Die anzuwendenden Photoinitiatoren bzw. Photosensibilisatoren sind an sich bekannt, und deren Auswahl ist nicht Gegenstand der Erfindung. Ihre Anwendung ist weitgehend begrenzt auf die zweckmäßige Anwendung von UV-Strahlung, jedoch können grundsätzlich auch andere ionisierende Strahlungsarten zur Anwendung gelangen. Brauchbare Photoinitiatoren bzw. Photosensibilisatoren sind. z.B. Benzophenon, Acetophenon, Benzoin und Methyl-, Butyl-oder Isobutylether von Benzoin sowie Benzilketale. Diese Substanzen werden im allgemeinen in Konzentrationen von 0,2 bis 5 Gew.% zugesetzt. 10-Thioxanthenon kann man in geringeren Konzentrationen, und zwar in der Größenordnung von 0,1 bis 0,3 Gew.% anwenden.

Wie schon erwährt, beschleunigt auch der Zusatz der erfindungsgemäßen Massen in anderen strahlungshärtbaren Systemen die UV-induzierte Polymerisation, insbesondere in Gegenwart von Luft.

Die erfindungsgemäßen Massen können relativ hochmolekular oder relativ niedermolekular sein. Höhermolekulare, d.h. nicht flüssige Produkte werden vorzugsweise in ethylenisch ungesättigten Flüssigkeiten wie Hydroxyethylacrylat, Trimethylolpropantriacrylat, Hexandioldiacrylat, oder Styrol gelöst. Der anteil an den erfindungsgemäßen Massen, d.h. an dem aminmodifizierten Acrylsäureester bzw. Methacrylsäureester in dem gesamten Mittel, das durch Bestrahlung gehärtet werden soll, kann in weiten Grenzen schwanken. Je höher der Anteil dieses Produktes ist, umso schneller bei der Verwendung der erfindungsgemäßen Massen in Druckfarben möglich.

Die erfindungsgemäßen Umsetzungsprodukte sind empfindlich gegenüber Sonnenlicht oder normalen weißen Leuchtstofflampen. Die Tendenz zur Gelierung wird dadurch eliminiert, daß in der Dunkelheit gearbeitet wird oder zumindest in Abwesenheit von UV-Strahlung. Dies erreicht man mit UV-filtrierten Fluorescenzlampen und Kunststoff-Filtern an Fenstern zur Begrenzung des Sonnenlichtes.

Überzugsmassen und Druckfarben, die diese erfindungsgemäßen Umsetzungsprodukte enthalten, polymerisieren in Gegenwart von Luft unter dem Einfluß von ionisierender Strahlung sehr schnell und vollständig über eine Vinylpolymerisation zu festen Überzügen.

Beispiel 1

Unter Rühren wurden bei Raumtemperatur 61 g Ethanolamin (1 mol) in 840 g Tripropylenglykoldiacrylat (2,8 mol), das zuvor mit 0,9 g 2,6-Di-tert.-butyl-p-kresol versetzt worden war, eingetragen (Mol-Verhältnis Monoamin zu (meth)acrylischen Doppelbindungen 0,18 : 1). Die Mischung wurde auf 60° C erhitzt und über Nacht bei dieser Temperatur belassen. Nach Abkühlen wurde eine farblose, klare Lösung erhalten, die eine Viskosität von 130 mPa.s bei 23° C aufwies.

Gaschromatographisch wurde ein Restmonomerenanteil von 40 Gew.% Tripropylenglykoldiacrylat nachgewiesen. Das Produkt war über 6 Wochen bei 60° C ohne merklichen Viskositätsanstieg im Dunkeln lagerfähig.

Beispiel 2

1500 g ( ≙ 9,2 mol Acrylestergruppen) eines Polyetheracrylates, das durch Umsetzung von 1340 g (10 mol) Trimethylolpropan mit 440 g (10 mol) Ethylenoxid und 1530 g (25 mol) Propylenoxid sowie anschließende Veresterung mit 2160 g (30 mol) Acrylsäure erhalten worden war, wurden mit 1,5 g 2,6-Di-tert.-butyl-p-kresol und 60 g (1 mol) Ethanolamin versetzt und über Nacht bei 60° C gelagert (Mol-Verhältnis Monoamin zu (meth)acrylischen Doppelbindungen 0,11 : 1). Die Viskosität stieg dabei von 110 mPa.s auf 520 mPa.s bei 23° C an und verändert sich nicht merklich bei weiterer 60° C-Lagerung über 4 Wochen.

Beispiel 3

540 g eines Polyesteracrylates aus 1460 g (10 mol) Adipinsäure, 836 g (19 mol) Ethylenglykol, 830 g (5 mol) Phthalsäure, 1072 g (8 mol) Trimethylolpropan und 1800 g (25 mol) Acrylsäure mit einer Doppelbindungsdichte von 3,2 mol pro kg wurde in 814 g Hexandioldiacrylat gelöst und mit 1,3 g 2,6-Di-tert.-butyl-p-kresol versetzt. Nach Zusatz von 61 g (1 mol) Ethanolamin und Lagerung bei 60° C über Nacht war die Viskosität der klaren Mischung von 100 mPa.s auf 535 mPa.s bei 23° C gestiegen, die Viskositäten nach 4-wöchiger Alterung bei 60° C betrug 570 mPa.s (23° C) (Mol-Verhältnis von Monoamin zu (meth)acrylischen Doppelbindungen 0,11 : 1).

Vergleichsbeispiel 1

1500 g des Polyesteracrylates aus Beispiel 2 wurden mit 73 g Diethylamin versetzt und über Nacht bei 60° C gelagert. Die Viskosität blieb mit 100 mPa.s (23° C) nahezu unverändert, bei einer 60° C-Alterung war jedoch mit 20 % nach 7 Tagen und 50 % nach 14 Tagen ein merklicher Anstieg festzustellen.

Beispiele 4 bis 17

50 g des Polyetheracrylates aus Beispiel 3 wurden mit 50 g Tripropylenglykoldiacrylat auf eine Viskosität von 440 mPa.s bei 23° C verdünnt und in Gegenwart von 0,1 g 2,6-Di-tert.-butyl-p-kresol und 0,3 g Methylhdyro chinon mit jeweils 0,03 bzw. 0,06 mol eines in der Tabelle 1 aufgeführten primären Amins versetzt und über Nacht bei 60° C gelagert (Mol-Verhältnis von Monoamin zu (meth)acrylischen Doppelbindungen 0,11 : 1).

In der folgenden Tabelle 1 sind die beobachteten Viskositäten nach Abkühlen auf 23° C sowie nach 2-wöchiger 60° C-Alterung aufgeführt:

Tabelle 1

| Beisp. | Amin | Einwaage (g) | Viskosität (mPa.s bei 23°C) nach 18 h | 2 Wochen |
|---|---|---|---|---|
| 4 | Ethanolamin | 1,8 | 1000 | 1050 |
| 5 | 3-Aminopropanol | 2,3 | 1120 | 1200 |
| 6 | Monoisopropanolamin | 2,3 | 1080 | 1200 |
| 7 | 2,2-Aminoethoxyethanol | 3,2 | 1050 | 1100 |
| 8 | n-Octylamin | 3,9 | 880 | 900 |
| 9 | Tridecylamin | 6,0 | 920 | 930 |
| 10 | Cyclohexylamin | 3,0 | 1000 | 1230 |
| 11 | Benzylamin | 3,2 | 880 | 1300 |
| 12 | Tetrahydrofurfurylamin | 3,0 | 1360 | 1400 |
| 13 | Ethanolamin | 3,6 | 3900 | 4350 |
| 14 | Monoisopropanolamin | 4,6 | 4450 | 4650 |
| 15 | 2,2-Aminoethoxyethanol | 6,4 | 4400 | 4700 |

Beispiel 16

In der 100 g der Lösung aus Beispiel 1 wurden 2 g Benzophenon und 1 g Benzildimethylketal gelöst. Der so erhaltene Klarlack wurde in einer Schicht von 100 µm auf Glasplatten aufgerakelt und mit einer

Beispiel 16

In 100 g der Lösung aus Beispiel 1 wurden 2 g Benzophenon und 1 g Benzildimethylketal gelöst. Der so erhaltene Klarlack wurde in einer Schicht von 100 µm auf Glasplatten aufgerakelt und mit einer Quecksilber-Hochdrucklampe (Leistung 80 Watt/cm Bogenlänge, gemessen auf dem Quarzglaszylinder der Röhre) bestrahlt. Der Abstand der Lampe zum Lackfilm, der auf einem Transportband unter der Lampe durchgefahren wurde, betrug 10 cm.

Bestimmt wurde die Transportgeschwindigkeit von 30 m/min als Maß für die Belichtungsdauer, bei welcher gerade noch eine kratzfeste Aushürtung erreicht werden konnte. Die Pendelhärte nach König (DIN 53 157) mit 59 sec., die 24 h-Wasserbeständigkeit mit Note 3 (Noten 0-4 ≙ sehr gut - schlecht) und das Ausschwitzen mit Note 0 (Noten 0-4 ≙ sehr gut - schlecht) wurde an Lackierungen ermittelt, die mit der langsamen Bandgeschwindigkeit von 5 m/min ausreichend vernetzt waren.

Vergleichsbeispiel 2

Eine Mischung aus 50 g des Polyesteracrylates aus Beispiel 3 und 50 g Trimethylolpropandiacrylat wurde mit 3 g Methyldiethanolamin, 2 g Benzophenon und 1 g Benzildimethylketal versetzt und als Klarlack analog zu Beispiel 16 verarbeitet und beurteilt. Die Ergebnisse sind in Tabelle 2 aufgeführt.

Beispiele 17 bis 29

Je 100 g der erfindungsgemäßen Massen aus den Beispielen 2 bis 15 und dem Vergleichsbeispiel 1 wurden analog zu Beispiel 16 mit 2 g Benzophenon und 1 g Benzildimethylketan versetzt und als Klarlacke analog zu Beispeil 16 verarbeitet und geprüft. Die Ergebnisse sind in Tabelle 2 aufgeführt.

Tabelle 2

| Beispiel | Masse aus | Reaktivität (m/min) | Pendelhärte n. König (sec.) | 24 h-Wasser-beständigkeit (Note 0-4) | Ausschwitzen (Note 0-4) |
|---|---|---|---|---|---|
| 17 | 2 | 45 | 52 | 0 | 0 |
| Vergl. 3 | Vergl. 1 | 15 | 39 | 4 | 0 |
| Vergl. 2 | - | 30 | 45 | 3,5 | 3 |
| 18 | 3 | 65 | 41 | 2,5 | 0 |
| 19 | 4 | 25 | 34 | 3 | 0 |
| 20 | 5 | 20 | 32 | 3 | 0 |
| 21 | 6 | 20 | 32 | 3 | 0 |
| 22 | 7 | 20 | 31 | 3,5 | 0 |
| 23 | 8 | 35 | 30 | 2 | 0 |
| 24 | 9 | 30 | 30 | 2 | 0 |
| 25 | 10 | 30 | 28 | 2 | 0 |
| 26 | 12 | 35 | 30 | 3,5 | 0 |
| 27 | 13 | 65 | 32 | 3,5 | 0 |
| 28 | 14 | 60 | 31 | 3,5 | 0 |
| 29 | 15 | 70 | 35 | 3,5 | 0 |

Die Lacke von Beispiel 17 und Vergleich 3 wurden auf weißes Papier aufgetragen, mit 5 m/min gehärtet und anschließend hinsichtlich Weißgrad untersucht. Vergleich 3 vergilbt deutlich mehr.

## Ansprüche

1. Additionsprodukte aus
A) einem Ester aus Acrylsäure und/oder Methacrylsäure und einem mehrwertigen Alkohol mit
B) einem primären Monoamin
mit einem Mol-Verhältnis von Monoamin zu (meth)acrylischer Doppelbindung des Esters von 0,05 : 1 bis 0,4 : 1.

2. Additionsprodukte nach Anspruch 1, bei denen die Komponente (A) ein Ester der Acrylsäure und/oder Methacrylsäure mit 2-bis 6-wertigen, bevorzugt 2-bis 3-wertigen, Alkoholen ist.

3. Additionsprodukte nach den Ansprüchen 1 und 2, bei denen die Komponente (A) Hydroxylgruppen hat.

4. Additionsprodukte nach den Ansprüchen 1 bis 3, bei denen die Komponente (B) ein primäres Monoamin mit 1 bis 18 C-Atomen ist.

5. Additionsprodukte nach den Ansprüchen 1 bis 4, bei denen die Komponente (B) ein primäres Hydroxyalkylamin ist.

6. Verwendung der Additionsprodukte gemäß den Ansprüchen 1 bis 5 in strahlungshärtbaren Überzugsmassen und Druckfarben.

7. Überzugsmassen, enthaltend die Additionsprodukte gemäß den Ansprüchen 1 bis 5.